# DEMANDE DE BREVET EUROPEEN

(11) **EP 1 000 574 A1**
(43) Date de publication de la demande: **17.05.2000**
(21) Numéro de dépôt: 98121745.8
(22) Date de dépôt: 16.11.1998
(51) Int. Cl.: A47J 31/40

(54) **Procédé et dispositif d'extraction d'une capsule fermée**

(71) Demandeur: SOCIETE DES PRODUITS NESTLE S.A., 1800 Vevey (CH)
(72) Inventeur: Mariller, Alain, 1462 Yvonand (CH); Yoakim, Alfred, 1806 St-Legier-La-Chiesaz (CH)
(74) Mandataire: Thomas, Alain

(57) **Abrégé**

Le dispositif selon l'invention comprend :
- un système d'extraction (2) constitué de deux éléments de serrage (3,4) indépendants et identiques, ménageant entre eux chacun sensiblement pour moitié un logement (5,6) pour la capsule,
- des moyens de serrage (7) solidaires du système d'extraction et de chaque côté dudit système d'extraction et permettant le basculement de la position écartée du plan vertical à la position verticale et la fermeture et l'ouverture dudit système d'extraction,
- un système de levier (8) solidaire desdits moyens de serrage précités et permettant pour l'utilisateur d'actionner lesdits moyens,
le système d'extraction (2), les moyens de serrage (7) et le système de levier (8) étant disposé sur un châssis (1) de machine et le dispositif comprenant en outre un système mobile (22) d'arrivée d'eau sur le haut du système d'extraction de la capsule fermée, entre les deux éléments de serrage (3,4).

## Description

La présente invention concerne un procédé d'extraction d'une capsule fermée ayant un plan de symétrie. L'invention concerne en outre un dispositif pour la mise en oeuvre du procédé.

Il est déjà connu de faire une extraction de cartouche fermée. Le brevet EP 242'556 concerne un dispositif pour la confection de boisson par extraction d'une cartouche disposée dans un porte-cartouche pour machine à café. L'inconvénient de ce dispositif est qu'il comprend un organe d'injection d'eau qui est un organe pointu, et qui par conséquent perce la cartouche. Ce percement de la cartouche n'est plus souhaité, car d'une part, il nécessite la présence d'un organe pointu onéreux et d'autre part, il suscite des remontées de marc de café dans ledit organe pointu.

Le but de la présente invention est de mettre au point un procédé et un dispositif, dans lesquels on peut amener l'eau pour l'extraction d'une capsule, sans déchirer ladite capsule.

La présente invention concerne un procédé d'extraction d'une capsule fermée ayant un plan de symétrie, dans lequel on introduit ladite capsule dans le logement d'un système d'extraction constitué de deux éléments de serrage ménageant entre eux, chacun sensiblement pour moitié ledit logement, de manière à ce qu'elle soit disposée dans le système selon un plan écarté du plan vertical, on amène ladite capsule dans un plan vertical, de manière à ce qu'elle soit emprisonnée de manière étanche dans ledit système et qu'une arrivée de liquide arrive par le haut de ladite capsule et on effectue l'extraction de ladite capsule, l'ouverture de la capsule se faisant sur des éléments en creux et en relief disposés sur au moins une face desdits éléments de serrage et l'écoulement du café se faisant sur le bas de ladite capsule.

Le procédé selon l'invention permet d'extraire la capsule faisant l'objet de la demande de brevet PCT/EP98/03826, à savoir un sachet souple fermé sous forme de portion individuelle prévu pour être extrait sous pression, contenant du café torréfié et moulu , constitué de deux feuilles souples identiques ou d'une seule feuille souple pliée de forme circulaire, ovale ou polygonale ménageant entre les deux feuilles ou entre les deux faces de la feuille pliée un espace pour le café et les deux feuilles ou les deux faces de la feuille pliée sont soudées sur leur périphérie de manière à ce que ledit sachet soit sensiblement symétrique par rapport à son plan de soudage, et le sachet est ouvert sous l'effet de la seule montée en pression lors de l'injection du fluide d'extraction, dans lequel les deux feuilles souples ou les deux faces de la feuille pliée se prolongent sur un côté dudit sachet au delà de leur ligne de soudure de manière à ménager entre lesdites feuilles ou entre les deux faces de la feuille pliée un canal permettant l'arrivée du fluide d'extraction, ledit canal étant sensiblement perpendiculaire à la ligne de soudure sur lequel il aboutit. Le procédé n'est cependant pas limité à ce type de capsule et peut être mis en oeuvre chaque fois qu'on a une capsule avec plan de symétrie et pour laquelle les feuilles formant la capsule sont scellées.

Selon le procédé de l'invention, on amène le fluide d'extraction à une pression suffisante, de manière à ce qu'il permette, à l'endroit d'arrivée dudit fluide, le déscellage des deux feuilles scellées. En réalité, il faut que les deux éléments de serrage permettent une bonne tenue de la capsule pour qu'elle résiste à la montée de pression lors de l'extraction et une bonne étanchéité au niveau de l'arrivée du fluide d'extraction. L'extraction de la capsule est effectué normalement à une pression comprise entre 2 et 10 bar, de préférence de l'ordre de 6 à 8 bar.

Pour obtenir une bonne extraction du café de la capsule, il faut une certaine durée pour l'extraction. Cependant, il ne faut pas non plus que l'extraction soit trop longue, car le consommateur souhaite rester dans les durées d'extraction des cafés espressos classiques. Le procédé selon l'invention permet normalement d'extraire de 250 à 300 cm3 par minute.

L'intérêt de disposer d'un procédé dans lequel on introduit la capsule à extraire dans un logement selon un plan écarté du plan vertical est que dans ce cas, il n'est plus nécessaire pour le consommateur de tenir le porte-capsule et de l'engager dans des rampes de serrage. Le consommateur a seulement à introduire la capsule à extraire dans le logement et à fermer le système d'extraction, ce qui élimine donc tout risque de dérèglement , de mauvais positionnement et autres.

L'invention concerne également le dispositif pour la mise en oeuvre du procédé décrit ci-dessus. Le dispositif comprend :
- un système d'extraction constitué de deux éléments de serrage indépendants et identiques, ménageant entre eux chacun sensiblement pour moitié un logement pour la capsule,
- des moyens de serrage solidaires du système d'extraction et de chaque côté dudit système d'extraction et permettant le basculement de la position écartée du plan vertical à la position verticale et la fermeture et l'ouverture dudit système d'extraction,
- un système de levier solidaire desdits moyens de serrage précités et permettant pour l'utilisateur d'actionner lesdits moyens,
le système d'extraction, les moyens de serrage et le système de levier étant disposé sur un châssis de machine et le dispositif comprenant en outre un système mobile d'arrivée d'eau sur le haut du système d'extraction de la capsule fermée, entre les deux éléments de serrage.

Les deux éléments de serrage comportent sur le pourtour du logement des joints d'étanchéité permettant un bon pincement de la capsule à extraire. Les moyens de serrage doivent permettre un passage de la position inclinée du système d'extraction à la position verticale, tout en permettant aux deux éléments de serrage de bien venir l'un contre l'autre, assurant d'une part un bon maintien de ladite capsule ainsi qu'une bonne étanchéité ( cette étanchéité est surtout nécessaire pour que lors de l'extraction, les scellages de ladite capsule ne lâchent pas). Le levier permet à l'utilisateur d'ouvrir et de fermer le système d'extraction. On arrive ainsi pour le consommateur à une très simple manipulation d'utilisation, à savoir introduction de la capsule à extraire et rabat du levier vers l'avant, comme explicité plus en détail ci-dessous.

Il est bien entendu que lors du rabat du levier vers l'avant, lors de l'extraction, il faut que de manière concomitante l'arrivée d'eau descende pour arriver sur le haut du système d'extraction. Le canal d'arrivée d'eau n'a pas besoin de comporter une aiguille : il faut simplement que le canal se positionne de manière bien étanche et c'est simplement la pression de l'eau qui délamine le scellage de la capsule à l'endroit d'arrivée de l'eau.

Il est possible selon l'invention de prévoir un logement pour la capsule fermée de grandeur variable, ce qui permet d'extraire soit des capsules pour une tasse ou des capsules pour deux tasses, avec un système mobile d'arrivée d'eau s'adaptant en conséquence.

Lors de l'extraction, c'est-à-dire lorsque l'eau chaude entre dans la capsule, on a une montée en pression dans ladite capsule : pour arriver à une ouverture , il faut que dans les éléments de serrage, des éléments en creux et en relief soient présents, de manière à ce que on arrive à une tension de rupture du matériau formant la capsule contre lesdits éléments en creux et en relief. On peut envisager que l'un des éléments de serrage ou les deux comportent des éléments en creux et en relief.

Les moyens de serrage utilisables selon l'invention peuvent être de différentes conceptions. Dans une forme de réalisation particulière, ces moyens de serrage sont constitués par
- une bielle de serrage solidaire par un bout de l'un des deux éléments de serrage, à mi-hauteur dudit élément,
- un levier de serrage en forme de L, solidaire en son point milieu de l'autre bout de la bielle de serrage, solidaire du second élément de serrage également à mihauteur dudit élément et solidaire d'une bielle maîtresse,
- une bielle maîtresse, dont une extrémité coulisse dans un guide du bas du châssis selon un axe de positionnement, l'autre extrémité étant solidaire du système de levier.

Ce mode de mise en oeuvre est celui des figures et sera explicité plus en détail en références aux dessins, sur lesquels
Fig. 1 est une vue schématique de côté du dispositif selon l'invention en position ouverte,
Fig. 2 est une vue schématique du dispositif de la figure 1 en position fermée,
Fig. 3 est une vue schématique lors de la phase d'ouverture, après l'extraction,
Fig. 4 est une vue schématique en fin d'ouverture et
Fig. 5 est une vue schématique montrant plus précisément l'axe d'éjection.

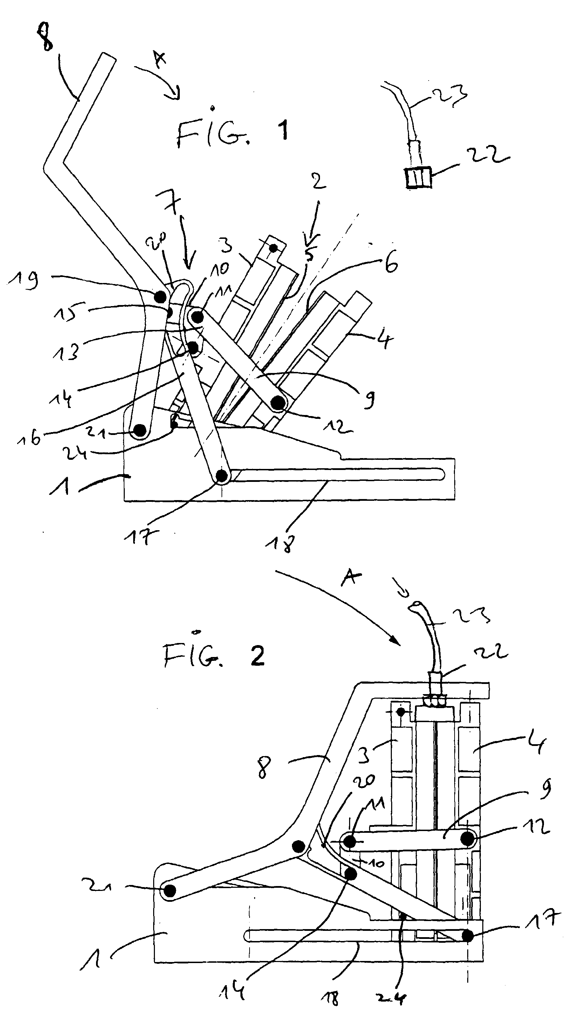

Les figures 1 à 4 représentent en fait pour un mode de réalisation du dispositif selon l'invention , la séquence globale d'extraction d'une capsule fermée (non représentée). L'arrivée d'eau est représentée, mais en amont, se trouve tout le bloc chauffant de l'eau (non représenté) grâce auquel l'eau arrive à la température souhaitée dans la capsule à extraire.

Le dispositif selon l'invention comprend un châssis (1) de machine sur lequel repose tout le mécanisme d'extraction. Celui-ci comprend le système d'extraction (2) constitué de deux éléments de serrage (3,4) indépendants et identiques, ménageant chacun pour moitié un logement (5,6) pour la capsule, les moyens de serrage (7) et le système de levier (8).

Les moyens de serrage (7) comprennent de chaque côté des éléments de serrage (3,4) :
- une bielle de serrage (9) solidaire à une extrémité (12) de l'élément de serrage (4), à mi-hauteur dudit élément,
- un levier de serrage (10) en forme de L, solidaire en son point milieu (11) de l'autre bout (13) de la bielle de serrage (9), solidaire selon l'axe (14) du second élément de serrage (3) également à mi-hauteur dudit élément et finalement solidaire par l'axe (15) d'une bielle maîtresse (16) et
- une bielle maîtresse (16), dont une extrémité coulisse selon un axe de positionnement (17) dans un guide (18) du bas du châssis (1) , l'autre extémité étant solidaire selon un axe (19) du système de levier (8).

La bielle maîtresse (16) comprend en outre un guide de travail (20), dans lequel glisse l'axe (15) du levier de serrage (10), suivant la phase d'ouverture ou de fermeture des éléments de serrage. Le levier (8) est monté à rotation sur le châssis (1) de la machine selon un axe (21).

Le dispositif comprend finalement un système mobile (22) d'arrivée d'eau.

Le fonctionnement du dispositif selon l'invention est le suivant :
Le dispositif est en position ouverte selon la figure 1. On introduit la capsule à extraire entre les deux éléments de serrage (3,4) et elle se positionne dans les logements correspondants (5,6). Le consommateur tire alors le levier (8) dans la direction de la flèche A pour arriver à la position de fermeture de la figure 2. Le pivotement du levier (8) actionne la bielle maîtresse (16) et l'axe de positionnement (17) se déplace dans le guide (18) du bas du châssis. Le levier de serrage (10) est simultanément sollicité par l'axe (15), ce qui a pour effet de mouvoir également la bielle de serrage (9).

Le mouvement du levier (8) a ainsi un double effet. Les moyens de serrage (7) constitués par la bielle de serrage (9), le levier de serrage (10) et la bielle maîtresse (16) mis en mouvement par le levier (8) permettent d'une part un redressement de la position inclinée à la position verticale des deux éléments de serrage (3,4) et un déplacement de translation de ces deux éléments vers le bout du guide (18). La configuration permet finalement d'arriver à ce que les deux éléments de serrage (3,4) coopèrent pour avoir une bonne étanchéité du système. Ce résultat est bien atteint lorsque l'axe de positionnement (17) est complétement à l'extrémité du guide (18) et lorsque le levier de serrage (10) en forme de L a une branche en position verticale et l'autre branche en position horizontale, si on considère le dispositif selon l'invention sur un plan horizontal, ce qui est normalement le cas.

De manière simultanée, lorsqu'on ferme la machine, le système d'arrivée d'eau (22) descend pour venir se positionner bien au milieu entre les deux éléments de serrage (3,4). Il faut en outre que ce positionnement s'accompagne d'une bonne étanchéité à ce niveau.

Le dispositif est maintenant prêt pour l'extraction de la capsule. L'eau chaude arrive par le canal (23) et sous l'effet de la pression de l'eau déscelle l'ouverture de la capsule. La montée en pression dans ladite capsule permet l'extraction par l'ouverture contre les éléments en creux et en relief. Le café est récupéré dans une tasse (non représentée) disposée sous les deux éléments de serrage (3,4) de la figure 2. L'extraction s'effectue en une durée normalement de l'ordre de la minute. Sur les figures, l'angle d'inclinaison des éléments de serrage est de l'ordre de 30 °.

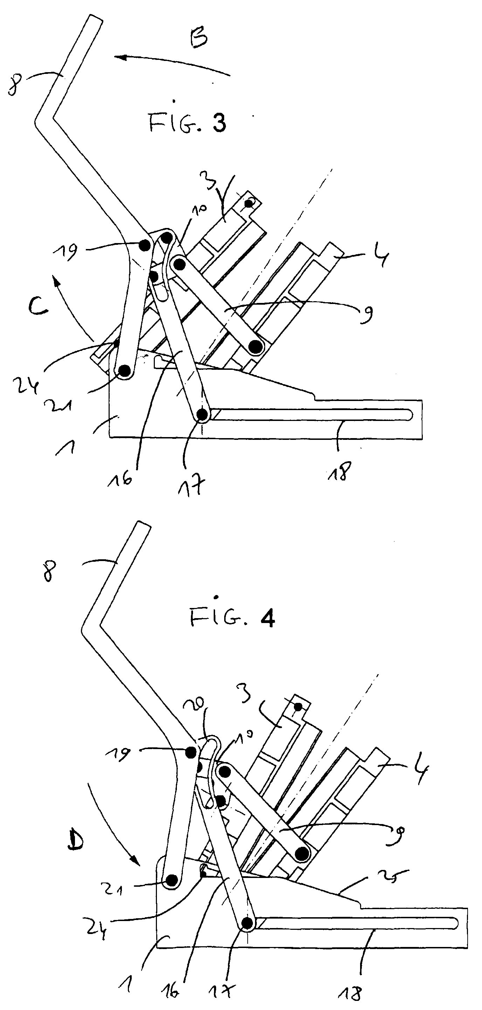

Après l'extraction, on opère selon la figure 3, à savoir le consommateur actionne le levier (8) dans le sens de la flèche B, ce qui a pour effet d'ouvrir les deux éléments de serrage (3,4). Cette ouverture se fait car le levier (8) actionne la bielle maîtresse (16) , ce qui a aussi pour effet d'actionner le levier de serrage (10) et la bielle de serrage (9). On arrive ainsi à l'ouverture.

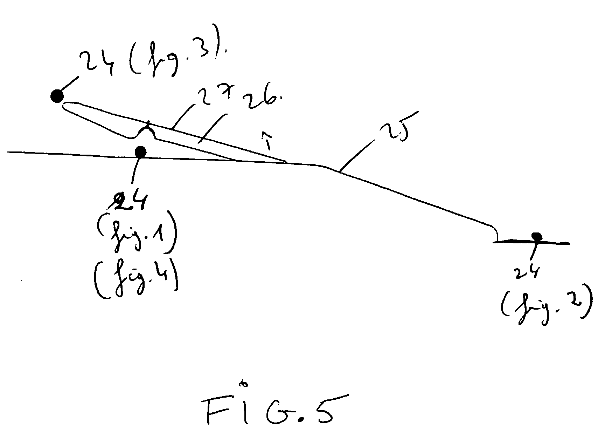

Le dispositif comprend en outre un axe d'éjection (24) de capsule. Cet axe d'éjection est solidaire du bas de l'élément de serrage (3). Lorsqu'on passe de la figure 1 à la figure 2, cet axe suit l'arête (25) du châssis (1) et pousse l'élément élastique d'encliquetage (26) vers le haut pour arriver finalement dans sa position de fermeture. La figure 5 montre bien le parcours de cet axe d'éjection. En fin d'extraction, on ouvre le système, ce qui fait remonter l'axe d'éjection (24) : il monte sur l'arête (25) et ensuite sur l'arête (27) de l'élément élastique d'encliquetage. Lorsqu'il arrive au bout de l'arête (27), on est dans la position de la figure 3, c'est-à-dire que l'élément de serrage (3) est légèrement basculé dans le sens de la flèche C, ce qui permet un dégagement automatique de la capsule usagée. L'axe d'éjection (24) retombe ensuite, ce qui a pour effet de faire basculer l'élément de serrage (3) dans le sens de la flèche D, de manière à ramener l'ensemble dans la position de la figure 4 où le dispositif est alors prêt pour extraire une nouvelle capsule.

## Revendications

1. Procédé d'extraction d'une capsule fermée ayant un plan de symétrie, dans lequel on introduit ladite capsule dans le logement d'un système d'extraction constitué de deux éléments de serrage ménageant entre eux, chacun sensiblement pour moitié ledit logement, de manière à ce qu'elle soit disposée dans le système selon un plan écarté du plan vertical, on amène ladite capsule dans un plan vertical, de manière à ce qu'elle soit emprisonnée de manière étanche dans ledit système et qu'une arrivée de liquide arrive par le haut de ladite capsule et on effectue l'extraction de ladite capsule, l'ouverture de la capsule se faisant sur des éléments en creux et en relief disposés sur au moins une face desdits éléments de serrage et l'écoulement du café se faisant sur le bas de ladite capsule.

2. Procédé d'extraction selon la revendication 1, caractérisé en ce que l'extraction de la capsule se fait à une pression comprise entre 2 et 10 bar.

3. Procédé selon l'une des revendications 1 ou 2, caractérisé en ce que l'extraction se fait à une vitesse comprise entre 250 et 300 cm3 par minute.

4. Procédé selon l'une des revendications 1 à 3, caractérisé en ce que l'angle d'écartement par rapport au plan vertical est compris entre 15 et 45 °.

5. Dispositif pour la mise en oeuvre du procédé selon l'une des revendications 1 à 4, comprenant
- un système d'extraction constitué de deux éléments de serrage indépendants et identiques, ménageant entre eux chacun sensiblement pour moitié un logement pour la capsule,
- des moyens de serrage solidaires du système d'extraction et de chaque côté dudit système d'extraction et permettant le basculement de la position écartée du plan vertical à la position verticale et la fermeture et l'ouverture dudit système d'extraction,
- un système de levier solidaire desdits moyens de serrage précités et permettant pour l'utilisateur d'actionner lesdits moyens,
le système d'extraction, les moyens de serrage et le système de levier étant disposé sur un châssis de machine et le dispositif comprenant en outre un système mobile d'arrivée d'eau sur le haut du système d'extraction de la capsule fermée, entre les deux éléments de serrage.

6. Dispositif selon le revendication 4, caractérisé en ce que le logement pour la capsule fermée peut recevoir des capsules de grandeur différente, le système mobile d'arrivée d'eau s'adaptant en conséquence.

7. Dispositif selon l'une des revendications 4 ou 5, caractérisé en ce que l'un des éléments de serrage ou les deux comportent des éléments en creux et en relief.

8. Dispositif selon l'une des revendications 5 à 7, caractérisé en ce que les moyens de serrage sont constitués par
- une bielle de serrage solidaire par un bout de l'un des deux éléments de serrage, à mi-hauteur dudit élément,
- un levier de serrage en forme de L, solidaire en son point milieu de l'autre bout de la bielle de serrage, solidaire du second élément de serrage également à mihauteur dudit élément et solidaire d'une bielle maîtresse,
- une bielle maîtresse, dont une extrémité coulisse dans un guide du bas du châssis selon un axe de positionnement, l'autre extrémité étant solidaire du système de levier.
